# EUROPEAN PATENT APPLICATION

(11) **EP 1 467 311 A1**
(43) Date of publication of application: **13.10.2004**
(21) Application number: 04076090.2
(22) Date of filing: 07.04.2004
(51) Int. Cl.: G06K 19/06, G01N 21/88

(54) **System and method for tagging tools and objects used in the workplace for quick visual identification**

(30) Priority: 09.04.2003 US 409901
(71) Applicant: The Boeing Company, Seattle, Washington 98124-2207 (US)
(72) Inventor: Blackwell, David B., Seattle, Washington 98112 (US); Sergoyan, Edward G., Mill Creek, Washington 98012 (US)
(74) Representative: Land, Addick Adrianus Gosling

(57) **Abstract**

A system and method for visually locating tools and objects (14,16,18), and particularly very small tools and objects, so that same are not left behind in a work area after a work task is completed. The system comprises an identifying component made from a polymeric material tinted with a neon colored pigment. A separate identifying component is fixedly attached to each tool or object to be used within a work area. The identifying component is adapted to glow or become highly luminescent with a fluorescent like glow when illuminated with a light of a certain wavelength. The system employs such a light source (26) having an optical coating over a lens thereof which passes only light having a predetermined wavelength. A user also wears an optical element (28) such as a pair of glasses which have an optical coating thereon adapted to pass only light having a predetermined wavelength. The optical element worn by the user serves to attenuate ambient light in the work area so that the luminescence of the identifying component is enhanced when the tool is viewed by the user.

## Description

### FIELD OF THE INVENTION

The present invention relates to systems and methods for visually identifying hard to locate objects and tools within a workplace, and more particularly to a system and method involving attaching an identifying component to each one of a plurality of tools or objects used within a work area, and using a filtered light source to illuminate the tool or object, which causes the identifying component attached to the tool or object to become highly visible when illuminated with the filtered light source.

### BACKGROUND OF THE INVENTION

In many industries, it is important during construction or repair of a machine or vehicle, especially an aircraft, that tools and objects used during the construction process not be left behind in a work area. With repair, maintenance or construction of aircraft, this is especially important because any object or tool left behind (e.g., drill bit, Allen wrench, etc.) has the potential of becoming foreign object debris (FOD). However, with tools used in the construction of aircraft and other various systems, such tools are often very difficult to spot in the work area. Inspecting a work area for any small tools or objects can take time and cause significant added expense to the manufacture, maintenance or repair process.

One method of attempting to track items used in a workplace involves the use of radio frequency tags that are physically attached to the tool or object. However, such tags, which vary in size but often have dimensions of between about 1.2 inch (30.48mm) in length, 0.5 inch (12.7mm) in height and .1875 inch (4.7625mm) thick, cannot practically be attached to very small tools such as Allen wrenches, small diameter drill bits, and even small wrenches. Thus, the use of radio frequency tags has generally been employed only with objects larger in size, where the tag itself is not so large in relation to the object so as to interfere with the use of the object or tool in the workplace.

Accordingly, there still exists a need for a system and method for tagging objects, tools, and especially such objects and tools having very small dimensions, through a visual process. Such a system and method would also need to be unobtrusive in a sense that the basic use of the tool or object is not impeded or rendered more difficult by the use of the identifying system and method.

### SUMMARY OF THE INVENTION

The present invention is directed to an optical system and method for tagging (i.e., marking) tools and other objects and identifying the presence of such tools and objects within a work area using a specially filtered light. The invention involves securing an identifying component to each tool or object to be used within a work area. The identifying component, in one preferred form, comprises a component having a luminescent quality. By "luminescent quality" it is meant a quality which causes the identifying component to glow or become intensely visible when a light having a predetermined frequency is used to illuminate the identifying component. In one preferred form a light having a filter which passes only a predetermined wavelength of light is used as the illuminating component. When the light is directed at a tool or object having an identifying component attached thereto, the identifying component "glows" or becomes luminescent, thereby making it very easily visually detectable, where it would not otherwise be readily visually detectable with the naked eye.

The method and apparatus of the present invention further preferably involves the use of an optical element through which a user looks when directing the filtered light source around a given work area. The optical element may be embodied by an eyepiece, a pair of goggles, a pair of glasses, etc. The optical element functions to filter out a significant portion of ambient light such that the user sees primarily only the reflected light resulting from the luminescence of the identifying component on each and every tool or object present within the work area. Thus, simply by the user directing the light source around the work area while viewing the work area through the optical element, the presence and location of very small tools or objects present within the work area can be determined.

In one preferred form, the light source comprises a hand held flashlight having a filter that passes only light having a wavelength of approximately 450 nanometers to approximately 500 nanometers. In another preferred embodiment the light source comprises a high power halogen light having a filter which passes light within the spectrum of approximately 450 nanometers to approximately 500 nanometers.

In one preferred embodiment, the optical element through which the user views the work area illuminated by the light source incorporates a filter which passes only light within a predetermined spectrum, and more preferably within a spectrum of between about 450 nanometers to approximately 550 nanometers.

The identifying component secured to each tool or object, in one preferred form, comprises a piece of adhesive tape having a layer of polyvinyl chloride (PVC) tinted with a neon or fluorescent-like color. The PVC layer "glows" with a high luminescence when the light source is directed at it and the object or tool is viewed through the optical element by the user. In another preferred embodiment a small block of plasticized material having a neon color or fluorescent-like tint may be secured to a tool or object such as by adhesive or by a separate physical clamp-like element or band.

In the various preferred embodiments of the invention, a user is able to quickly detect the presence of a tool or object, and most importantly very small tools or objects that would not be readily visible within the work area with the naked eye. Importantly, the identifying component attached to each tool or object does not impede the usability of the tool or object.

Further areas of applicability of the present invention will become apparent from the detailed description provided hereinafter. It should be understood that the detailed description and specific examples are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of a work area with a user employing a system in accordance with a preferred embodiment of the present invention to locate a plurality of small tools left behind in the work area after a work task has been completed;
Figure 2 is a perspective view of one of the tools shown in Figure 1 more particularly showing an identifying component of the system of the present invention secured to the tool;
Figure 3 is an enlarged, side cross-sectional view of the identifying component of Figure 2, taken in accordance with section line 3-3 in Figure 2, before the component has been attached to the tool shown in Figure 2;
Figure 4 is a perspective view of the tool of Figure 2 but with an identifying component in accordance with an alternative preferred embodiment of the present invention secured thereto;
Figure 5a is a perspective view of a tool in which the identifying component forms hand grips that are used on the tool;
Figure 5b is a perspective view of a pair of ear plugs formed from neon color tinted material;
Figure 5c is a perspective view of a work glove formed from a material including a neon color tint;
Figure 6 is a perspective, enlarged view of the light source shown in Figure 1; and
Figure 7 is a perspective view of the optical element worn by the user in Figure 1 to filter out extraneous light and to enhance the luminescence of the identifying component.

### DETAILED DESCRIPTION OF THE PREFERRED EMBODIMENTS

The following description of the preferred embodiment(s) is merely exemplary in nature and is in no way intended to limit the invention, its application, or uses.

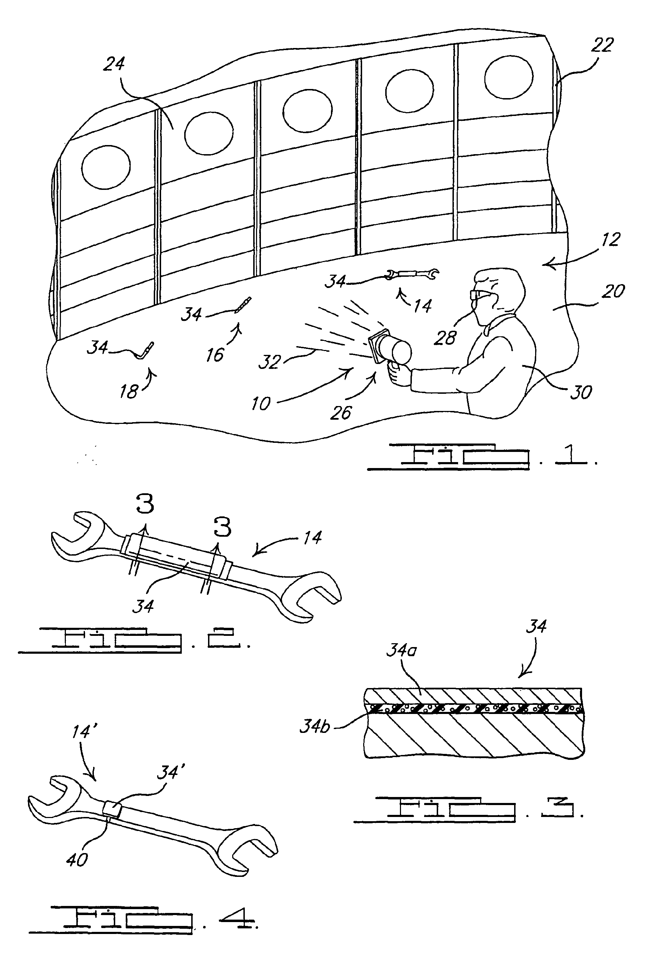

Referring to Figure 1, there is shown a system 10 in accordance with a preferred embodiment of the present invention. System 10 is used within a work area 12 in which a plurality of tools 14, 16 and 18 or other objects have been left behind. It will be appreciated that due to the size of the work items 14, 16 and 18, in addition to the color and texture of a floor 20 and walls 22 and 24 of the work area 12, as well as other physical structures present in the work area, that the visual presence of tools 14, 16 and 18 may not be readily visually detectable by the user with the naked eye. As such, tools 14, 16 and 18 might be inadvertently left behind in the work area 12 after a work task is completed. As will be appreciated, in various work environments, such as in aircraft repair or maintenance work, leaving behind tools or other objects in or around an aircraft can lead to such tools or objects becoming foreign object debris (FOD). In other work environments, inadvertently leaving one or more tools or objects behind in a machine or other system might eventually cause damage to the machine or system. Thus, it should be appreciated that it is very important in many work environments that all the tools used on a given work project be picked up and removed from the work area.

It will also be appreciated that while tools 14, 16 and 18 have been illustrated as an open end wrench, a drill bit, and an Allen wrench, respectively, that the present invention can be used with virtually any form of tool or object that might be needed at a worksite and that might be inadvertently left behind when the work task is completed. The present invention provides the important advantage of being usable with very small tools or objects where a radio frequency tag would be difficult or impossible to employ because of its physical size.

With further reference to Figure 1, the system 10 further employs a light source 26 and an optical element 28. The light source 26 can be a hand holdable light source such as a flashlight, a high intensity halogen lamp, or any other form of light source, and it could be a light source adapted to be supported on a moving platform.

Preferably, the light source is hand holdable so that it can be easily directed around the work area with one hand of a user 30. The user 30 employs the optical element 28 to view the work area 12 while scanning the work area 12 with the light source 26 for any tools or objects that may have been left behind after a work task is completed. As will be explained in greater detail, the light source 26 produces a light beam 32 which can be used to illuminate portions of the work area 12 as the user 30 directs the light source 26 at various angles and orientations around the work area 12. Each tool or object 14, 16, 18 employed in a work task within the work area 12 includes an identifying component 34 fixedly secured thereto. When the light beam 32 of the light source 26 is directed at the tool 14, or 16, or 18, its associated identifying component 34 "glows" or becomes luminescent. This provides a quick and easy means for the user 30 to visually identify the presence and location of the tool so that the tool can be retrieved before the user 30 leaves the work area 12.

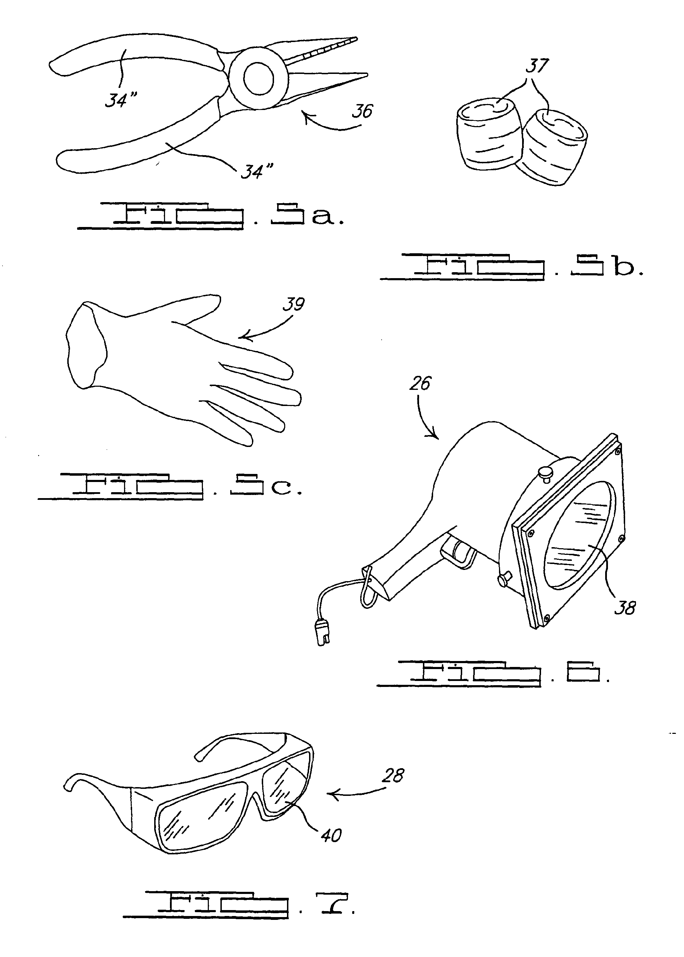

Referring now to Figure 2, tool 14 can be seen in enlarged fashion. Tool 14 in this example comprises an open end wrench. The tool 14 has fixedly secured thereto the identifying component 34. In this example identifying component 34 comprises a fluorescent (i.e., neon or neon-like) pigmented, heavily plasticized chlorinated polymeric material. The plasticizer is preferably comprised of phthalate ester-type materials. The base polymer is preferably a polyvinyl chloride (PVC) material. Preferably the color or tint of the neon or fluorescent material is a shade of pink or orange, but it will be appreciated that other colors could also be used. The colors pink and orange have proven to provide a highly visible, intense luminescence when illuminated with the light source 26.

With brief reference to Figure 3, the identifying component 34 is shown before attachment to the tool 14. The identifying component 34 includes a fluorescent or neon color tinted PVC layer 34a and an adhesive layer 34b. PVC layer 34a may vary significantly in thickness, but is preferably on the order of about 0.0625 inch (1.59 mm thick). Of course, the thickness of the PVC layer 34 could vary depending upon the type of tool it will be secured to and/or the degree of handling and use the tool is anticipated to receive. The adhesive layer 34b may comprise any suitable adhesive that prevents the identifying component 34 from being easily removed from the tool 14 once secured to the tool.

Referring briefly to Figure 4, the tool 14 is shown with an alternative preferred form of identifying component 34' attached thereto. Component 34' essentially comprises a block of PVC material which has been tinted with a neon or fluorescent color, preferably a neon pink or neon orange color. The block of material 34' may be secured via a very small element such as a cable tie 40 which is adhered to the identifying component 34', or which extends through an opening in the identifying component. Still further, two or more independent sections of identifying components 34' may be used and secured adjacent to one another with a fastening element extending through both identifying components 34' in a manner that clamps them to the tool 14 it will be appreciated that a wide variety of means may be employed to secure one or more of the identifying components 34' to the tool, and the exact means of securing will be determined in large part on the type of tool being used. It is anticipated that the PVC tape of identifying component 34 will be most suitable for very small tools such as drill bits and Allen wrenches, and that the identifying component 34' may be more suitable for larger tools such as drills, saws, measuring tools, etc.

Referring briefly to Figure 5a, a tool 36 including a pair of hand grips 34" is shown. Each of the grips 34" are manufactured from a polyvinyl chloride or other like material which is tinted with a neon or fluorescent color, and preferably a neon pink or neon orange color. The identifying components 34" thus serve the dual purpose of providing a grippable surface that enhances the use of the tool 36 as well as allowing the tool to be easily detected with the light source 26 of Figure 1.

Figure 5b shows earplugs 37 made entirely from a polyvinyl or like material with a neon colored tint, and preferably a neon pink or neon orange colored tint. Figure 5c shows a work glove 39 made entirely from a polyvinyl or like material that is tinted with a neon or fluorescent color, and preferably with a neon pink or orange color. Thus it will be appreciated that the identifying component could form a functional part, or an entire portion, of a tool or object which is used within the work area 12.

Referring now to Figure 6, a simplified illustration of the light source 26 is shown. Light source 26 includes an optical coating or lens 38 which functions to pass light within the spectrum of preferably between about 475 nanometers-550 nanometers, and more preferably light having a wavelength of about 490 nanometers. Such a light has a bluish tint. The light source 26 in one preferred form comprises a high power halogen spotlight having a two million candle power rating. Alternatively, the light source 26 may simply comprise a hand held flashlight with the optical coating 38 is employed over the lens of the flashlight. As will be appreciated, the more powerful the light source 26, the greater distance at which the light source will be able to illuminate tools and objects that may be scattered about a work area and not readily visually detectably by the user 30. However, it will be appreciated that the present invention is not limited to any particular form of light generating implement.

Referring now to Figure 7, the optical element 28 is shown in exemplary form. The optical element 28 similarly includes an optical coating 40 adapted to pass only light having a wavelength of preferably between approximately 475 nanometers and about 575 nanometers, and more preferably light having a wavelength of about 525 nanometers. Such an optical coating serves to filter ambient light in the work area 12 so that substantially only that portion of the light which emanates (i.e., is reflected) from the identifying component 34, 34'or 34" is seen by the user 30. The optical coating 40 effectively serves to enhance the luminescence of the identifying component 34, 34' or 34" as the light source 26 is directed at the identifying component. It will be appreciated, however, that while the optical element 28 is illustrated as a pair of glasses, that an eyepiece or even conventional goggles could be employed provided the optical coating 40 is used therewith. Still further, a camera or video device could be employed with the optical coating 40 in a lens thereof. Such a device could enable a user to view remote locations for objects that would be difficult for the user to see directly.

The system and method 10 of the present invention thus provides a means by which the user 30 can quickly scan the work area 12 for any tools, objects or other implements which may not be readily visually detectable with the naked eye. Most advantageously, the system and method 10 allows the user to quickly search for very small tools and other objects that would be very difficult to spot with the naked eye. As soon as the light source 26 illuminates a given tool or object which includes the identifying component 34, 34' or 34", the identifying component will give off a luminescent glow that is quickly and easily detectable by the user 30 as he/she views the tool 14, 16 or 18 through the optical element 28. The system 10 can be used to quickly locate variously sized objects and does not acquire significant added expense to employ with a wide variety of tools and objects. Since the identifying component 34, 34' or 34" can be made very small, it is ideal for use on very small objects or tools where a radio frequency tag cannot be practically employed. Furthermore, since the system and method of the present invention does not employ ultraviolet light, it is safer for use in various work areas where other workers may not be wearing suitable eye protection.

Furthermore, while the foregoing discussion provides an example of the system 10 being used in a work area to locate tools or other objects, it will be appreciated that the system 10 of the present invention could be employed in any environment where small or difficult to see objects or components need to be located once a task is completed. Such other applications might include surgical applications. As such, it will be appreciated that the system 10 and method of the present invention is anticipated to find utility in a wide variety of applications.

The description of the invention is merely exemplary in nature and, thus, variations that do not depart from the gist of the invention are intended to be within the scope of the invention. Such variations are not to be regarded as a departure from the spirit and scope of the invention.

## Claims

1. A method for locating at least one object within a work area, comprising:
attaching to said object to be used within said work area an identifying component adapted to provide a luminescent glow when illuminated with a predetermined light source; and
scanning said work area with said predetermined light source, wherein said predetermined light source, when passing over said identifying component, causes said identifying component to glow with illumination, thereby identifying said object to a worker.

2. A visual detection method according to claim 1, comprising:
attaching a plurality of said objects to be used within said work area an identifying component adapted to be highly visible when illuminated with a predetermined light source.

3. A method according to claim 1 or 2, comprising:
attaching to said object a polymeric identifying component having a luminescent property; and
having said worker view said work area through an optical element adapted to intensify said illumination of said identifying component when said light source illuminates said object.

4. A method of visually locating an object according to claim 1, 2 or 3, said method comprising:
forming at least a part of said object with a material having a color that generates a luminescent glow when said material is illuminated with light having a predetermined frequency spectrum, so as to attack said component.

5. The method of any of claims 1-4, wherein attaching to said object an identifying component comprises attaching to said object a material having a fluorescent property causing it to radiate a fluorescent optical signal when illuminated with said predetermined light source.

6. The method of any of claims 1-5, wherein attaching to said object an identifying component comprises attaching a piece of fluorescent pigmented, plasticized, chlorinated polyvinyl material.

7. The method of any of claims 1-6, wherein scanning said work area with said predetermined light source comprises scanning said work area with a filtered, high intensity light source adapted to radiate a light beam having a predetermined wavelength.
said work area with a light source that generates a light having a wavelength between approximately 450 nanometers and approximately 550 nanometers.

8. The method of any of claims 1-7, further comprising the step of having said user view said work area through a filtered optical element adapted to filter out at least a portion of ambient light in said work area.

9. The method of claim 8, wherein using said filtered optical element comprises using a filtered optical lens that passes light having a wavelength between approximately 475 nanometers and approximately 575 nanometers.

10. The method of claim 9, wherein said filtered optical lens passes light having a wavelength of approximately 525 nanometers.

11. The method of any of claims 1-10, wherein attaching to said object an identifying component comprises attaching an identifying component comprising a length of tape, wherein the tape includes a layer of polyvinyl chloride (PVC) material tinted with a neon-like color.

12. The method of any of claims 1-11, wherein said predetermined light source comprises a halogen light source having a lens adapted to filter light output there from such that only light within a predetermined frequency spectrum is emitted.

13. The method of any of claims 1-12, wherein said predetermined light source generates a light having a wavelength of between approximately 450 nanometers and 550 nanometers.

14. The method of any of claims 1-13, wherein said identifying component comprises a neon-colored, chlorinated polymeric material.

15. A system for visually locating an object within a work area, comprising:
an identifying component adapted to be fixedly secured to said object before said object is used within said work area, said identifying component being tinted with a pigment that provides a fluorescent-like glow when illuminated with light having a first predetermined wavelength; and
an apparatus for generating light having said first predetermined wavelength, said apparatus being portable to enable a worker to scan said work area with said apparatus to detect a location of said object within said work area; and
a viewing element used by said worker to view said work area when attempting to detect said object, said viewing element being operable to filter out a portion of ambient light in said work area to enhance lamination of said identifying component.

16. The system of claim 15, wherein said first predetermined wavelength comprises a wavelength of approximately 490 nanometers.

17. The system of claim 15 or 16, wherein a method according to any of claims 1-14 is used.
